# EUROPEAN PATENT SPECIFICATION

(11) **EP 2 102 525 B1**
(45) Date of publication and mention of the grant of the patent: **24.10.2012**
(21) Application number: 08720184.4
(22) Date of filing: 09.01.2008
(51) Int. Cl.: F16F 1/376, F16F 15/08, F16F 1/373

(54) **ANTI-VIBRATION, SHOCK ABSORBER AND SOUND-PROOFING ELEMENT**
ANTIVIBRATIONS-STOSSDÄMPFER UND SCHALLSCHUTZELEMENT
ÉLÉMENT ANTI-VIBRATION, ABSORBEUR DE CHOCS ET ISOLATION ACOUSTIQUE

(30) Priority: 16.01.2007 IT BS20070005
(43) Date of publication of application: 23.09.2009
(73) Proprietor: G. & G. S.R.L., 24024 Lallio (IT)
(72) Inventor: PAPARO, Giovanni, I-25036 Palazzolo Sull' Oglio (Brescia) (IT); PAPARO, Samuele, I-25036 Palazzolo Sull' Oglio (Brescia) (IT)
(74) Representative: Pes, Matteo
(86) International application number: PCT/IT2008/000014
(87) International publication number: WO 2008/087682

(56) References cited:
- EP-A- 0 379 689
- WO-A-97/16655

## Description

### Field of the Invention

This invention concerns a multifunction element, made using either a plastic or elastomer material, suitable and applicable in all sectors, from domestic to civil and industrial where stability at least between two parts is required, otherwise susceptible to relative movements, either because they are resting one against the other or joined together by overlapping.

### State of the technique

When in order to be used, two parts must be in reference to each other either by resting against or by being one on top of the other, often they do not match perfectly either due to a defect in shape or dimensional and play tolerances during assembly. They are consequently susceptible to oscillation or tilting movements that can cause vibrations and noise, especially when the parts are metal or however made of a rigid material.

Document EP0379689 describes a flat plate mount consisting of a strip or plate through which pass hollow channels and cavities, and document WO97/16655 describes a damper consisting of a plate having a central hole and one or more slits extending from the central hole. In both solutions, the described elements, since they are planar, are not able to amortize even the perimeter sides of two parts coupled one to the other by overlapping insertion of one part into the other part.

### Objectives and summary of the Invention

One objective of this invention is to resolve this problem efficiently and in fact proposes a plastic amortizing element which, placed between the surfaces of the parts which must be put one on the other, is able to compensate every matching and assembly defect they may have, thus avoiding any defective movement and, consequently, guaranteeing their stability and soundproofing.

Another objective of the invention is to supply a useful and low cost amortizing element that can be achieved in different flat and three dimensional shapes and with a maximum degree of adaptability for its really easy and universal use with a wide range of components in innumerable different sectors.

These objectives and implicit advantages deriving from them are achieved by a multi-function element according to at least claim 1 in the appendix.

The shape of every amortizing element will be selected each time depending on the profiles of the parts to be joined together so that they can be fitted and adjusted better to the contact surfaces of these parts so as to form elastic tension which ensures their stability and enables the noise due to tilting to be dampened.

Two fundamental types of amortizing elements can be envisaged: simply by contact only between overlapping flat surfaces; by contact between base and lateral orthogonal surfaces, for parts to be inserted or fitted one into the other.

Furthermore each amortizing element can also be prepared to be joined modularly with other elements for maximum compatibility with all contact surfaces.

### Brief description of the Drawings

The attached drawings show purely indicative examples of practical forms of this invention and that will be described in greater detail below. In said drawings:
Fig. 1 shows a fundamentally L shaped element with a vertical wall corrugated parallel to the horizontal base wall;
Fig. 2 shows a similar element to the one in Fig. 1, but with angle inserts between the horizontal and vertical walls;
Fig. 3 shows another L shaped element, but with a vertical wall corrugated at right angles to the horizontal base wall;
Figs. 4 and 4a show two different views of a similar element to the one in Fig. 3, but with protrusions on the horizontal base wall;
Fig. 5 shows a similar element to the one in Fig. 3, but with the vertical wall provided with cutting traces;
Figs. 6, 7, 8 and 9 show amortizing elements with further configurations.

### Detailed description of the Invention

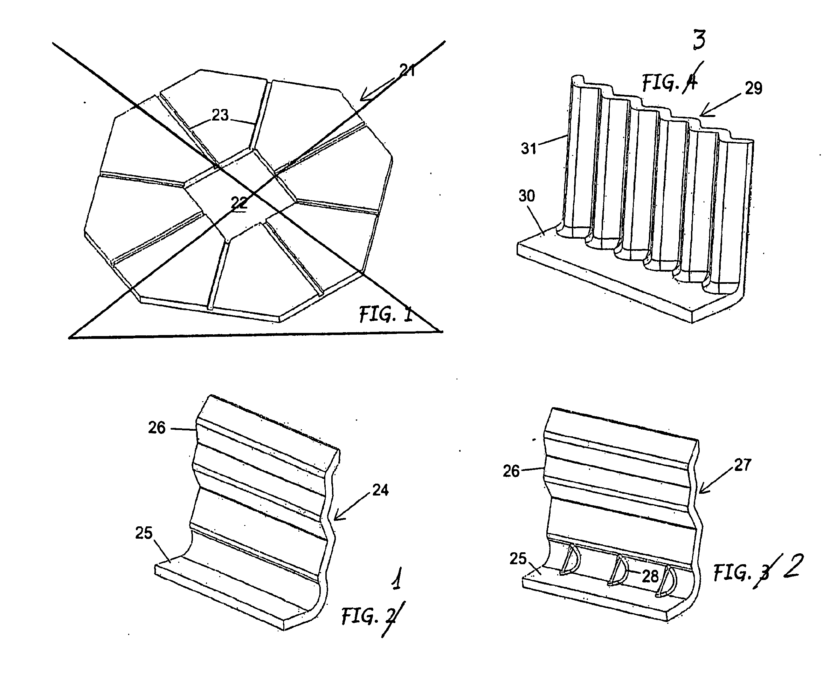

An amortizing element can be formed by a body with a basically L shape having a horizontal supporting wall and a vertical part that can both be basically flat. But in particular, the element 24 as shown in Fig. 1, has a horizontal flat wall 25, whereas the vertical wall 26 is corrugated in parallel to the horizontal wall. The element 27 in Fig. 2 is analogous to element 24 with the addition of inserts or corner ribs 28 between the horizontal 25 and vertical wall 26.

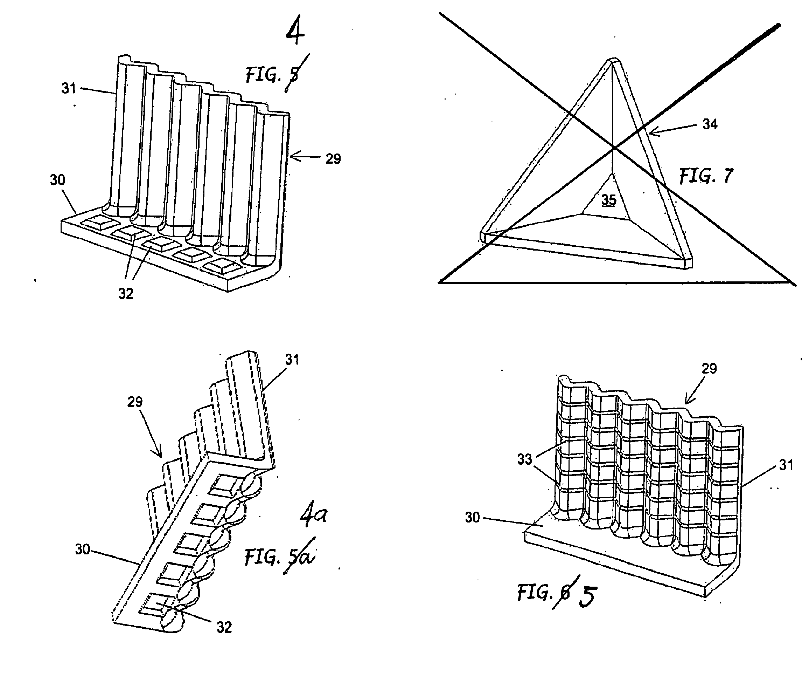

The element 29 in Fig. 3 has also an L shape with a flat horizontal supporting wall 30, but with a vertical wall 31 corrugated perpendicularly to the supporting wall. The supporting wall 30 can be equipped with protrusions 32 as shown in Figs. 4 and 4a, and/or the vertical wall can be provided with cutting trace marks 33, as shown in Fig. 5, so as to be able to remove portions and adjust the height according to requirements.

From one point of view, the corner inserts 28 and/or the protrusions 32 on the horizontal wall of every amortizing element help to compensate the play on the supporting plane of the joined parts, improving in this way its horizontal stability. On the other hand the corrugations, both horizontal and vertical, are provided to give each amortizing element a "spring" effect that helps to compensate lateral play and transversal blocking of the joined parts where each element is inserted between the contact surfaces.

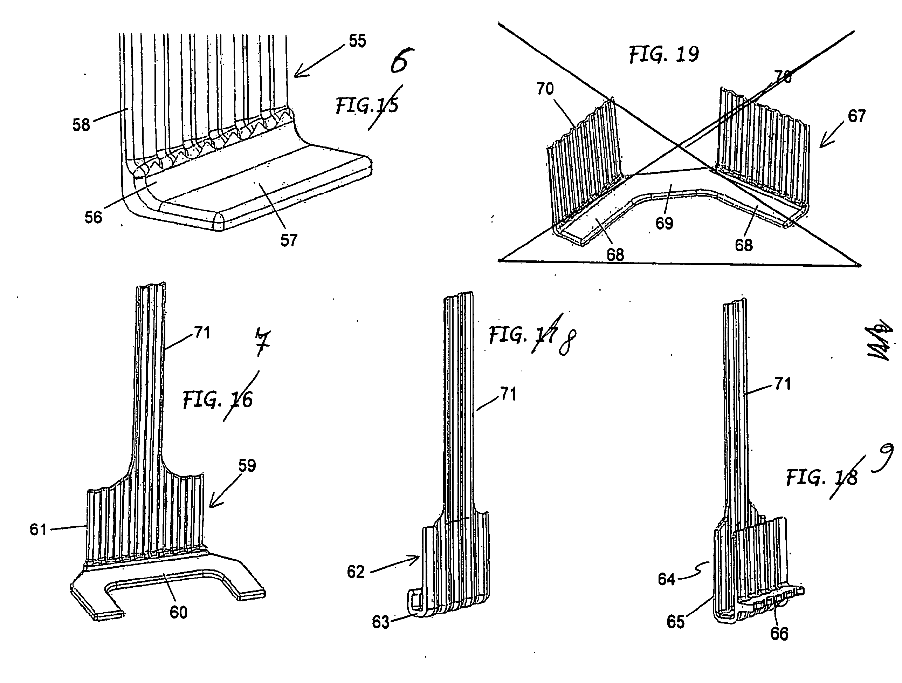

And once more, the amortizing element 55 in Fig. 6 is basically L shaped, but with a step 56 between a flat horizontal section and a corrugated vertical section 58.

The amortizing element 59 in Fig. 7 has a forked horizontal part 60 and a vertical corrugated part 61.

The amortizing element 62 in Fig. 8 has, as horizontal wall, an asymmetric U shaped body 63 forming a channel 63, whereas element 64 in Fig. 9 has a basically U shaped body forming a channel 65 and having a shelf-shaped protrusion 66 on one front side.

In addition, each of the L-shaped elements described above can be provided with a thin strip or tongue 71 - Figs. 6-9 - acting as a means for gripping to facilitate handling and positioning the elements for use also having a safety implication, given the fact that it avoids the risk of damage to the operator's fingers. It can be inserted and fixed to the element or an integral part of the latter and have a reduced thickness and/or a tear away section to be removed after the element has been placed in position.

Whatever the configuration, the amortizing elements according to the invention can be made out of any suitable plastic material, including elastomer, thermoplastics, thermosetting compositions, foamed polymers, silicone in paste or liquid form, with a possible lining and/or overmoulding with inserts or metal net. They can also be provided with an open or closed cell or honeycomb spongy structure. In addition they can be provided with adhesive or dual adhesive bands to facilitate application, in the same way as they may have different colouring in order to visibly recognise the correct destination.

## Claims

1. Amortizing element to be placed between parts inserted one into the other to ensure stability and soundproofing of the connection by eliminating the assembly defects and play, **characterized by** a three-dimensional plastic material body, structured to form at least one horizontal supporting section and at least one section for the protection of at least a peripheral area of the contact surfaces between said parts to be joined.

2. Amortizing element according to claim 1, **characterized by** a basically L shaped body with a horizontal supporting wall (25) and a vertical wall (26).

3. Amortizing element according to claim 2, **characterized by** the fact that the horizontal supporting wall (25) and the vertical wall (26) are both basically flat.

4. Amortizing element according to claim 2, **characterized by** the fact that said horizontal supporting wall (25) is flat, and said vertical wall (26) has corrugations parallel to the horizontal wall.

5. Amortizing element according to claims 2 and 3 or 4, **characterized by** the fact that between the horizontal supporting wall and the vertical wall inserts or corner ribs (28) have been provided.

6. Amortizing element according to claim 2, **characterized by** the fact that said horizontal wall (30) is flat, and that said vertical wall (31) has corrugating at right angles to the horizontal wall.

7. Amortizing element according to claim 6, **characterized by** the fact that a step (56).has been provided between the horizontal wall (57) and the vertical wall (58).

8. Amortizing element according to claim 6, **characterized by** the fact that the base wall is fork shaped (60).

9. Amortizing element according to claim 2, **characterized by** the fact that said horizontal wall (30) has relief (32), and that said vertical wall has corrugating at right angles to the horizontal wall.

10. Amortizing element according to any of the preceding claims, **characterized by** the fact that at least the vertical wall is provided with cutting trace marks (33) so as to be able to remove portions and adjust the height.

11. Amortizing element according to any of the preceding claims, **characterized by** the fact that said body is provided with a tongue or gripping strips that can possibly be removed.

12. Amortizing element according to any of the preceding claims, **characterized by** the fact that said body can be provided with adhesive or bi-adhesive surfaces.

13. Amortizing element according to any of the preceding claims, **characterized by** the fact that said body is made of a plastic material chosen between elastomer, thermoplastics, thermosetting compositions, foamed polymers, and silicone in paste or liquid form, with a possible lining and/or overmoulding with inserts or metal net.

## Patentansprüche

1. Dämpfungselement das zwischen ineinander steckenden Teilen gestellt werden soll, um Stabilität und Schalldichtung der Verbindung durch Vermeiden der Einbaubaufehler und Spiele zu gewährleisten, der durch einen dreidimensionalen Kunststoffkörper gekennzeichnet ist, der dazu strukturiert ist um zumindest einen horizontalen Stützabschnitt und zumindest einen Abschnitt zu bilden, zum Schutz zumindest eines Randgebietes der Kontaktoberflächen zwischen den genannten zu verbindenden Teilen.

2. Dämpfungselement nach Anspruch 1, der durch einen grundsätzlich L-geformten Körper mit einer horizontalen Stützwand (25) und einer vertikalen Wand (26) gekennzeichnet ist.

3. Dämpfungselement nach Anspruch 2, **dadurch gekennzeichnet dass** die horizontale Stützwand (25) und die vertikale Wand (26) beide grundsätzlich flach sind.

4. Dämpfungselement nach Anspruch 2, **dadurch gekennzeichnet dass** die genannte horizontale Stützwand (25) flach ist und dass die genannte vertikale Wand (26) parallel zur horizontalen Wand verlaufende Faltungen hat.

5. Dämpfungselement nach den Ansprüchen 2 und 3 oder 4, **dadurch gekennzeichnet dass** zwischen der horizontalen Stützwand und der vertikalen Wand Einsatzstücke oder Eckrippen (28) vorgesehen sind.

6. Dämpfungselement nach Anspruch 2, **dadurch gekennzeichnet dass** die genannte horizontale Wand (30) flach ist und dass die genannte vertikale Wand (31) rechtwinkelig zur horizontalen Wand verlaufende Faltungen hat.

7. Dämpfungselement nach Anspruch 6, **dadurch gekennzeichnet dass** ein Absatz (56) zwischen der horizontalen Wand (57) und der vertikalen Wand (58) vorgesehen ist.

8. Dämpfungselement nach Anspruch 6, **dadurch gekennzeichnet dass** die Grundwand gabelförmig (60) ist.

9. Dämpfungselement nach Anspruch 2, **dadurch gekennzeichnet dass** die genannte horizontale Wand (30) ein Relief (32) hat und dass die genannte vertikale Wand rechtwinkelig zur horizontalen Wand verlaufende Faltungen hat.

10. Dämpfungselement nach einem der vorhergehenden Ansprüche, **dadurch gekennzeichnet dass** zumindest die vertikale Wand mit Schnittzeichen (33) vorgesehen ist, wodurch es möglich ist Teile zu entfernen und die Höhe einzustellen.

11. Dämpfungselement nach einem der vorhergehenden Ansprüche, **dadurch gekennzeichnet dass** der genannte Körper mit einer Zunge oder mit einem Griffstreifen versehen ist, die möglicherweise entfernbar sind.

12. Dämpfungselement nach einem der vorhergehenden Ansprüche, **dadurch gekennzeichnet dass** der genannte Körper mit klebenden oder doppelseitig klebenden Oberflächen versehen werden kann.

13. Dämpfungselement nach einem der vorhergehenden Ansprüche, **dadurch gekennzeichnet dass** der genannte Körper aus einem Kunststoff hergestellt ist, der unter einem Elastomer, Thermoplaste, duroplastiche Verbindungen, geschäumte Polymere und pastenartige oder flüssige Silikone, mit einem eventuellen Belag und/oder Umspritzen mit Einsatzstücken oder mit einem metallischen Netz, ausgewählt ist.

## Revendications

1. Elément amortisseur qui doit être mis en place entre parties qui sont insérées l'une dans l'autre afin d'assurer stabilité et insonorisation de la connexion en éliminant les défets d'assemblage et le jeu, **caractérisé par** un corps tridimensionnel en matière plastique, qui est structuré pour former au moins une section horizontale de support et au moins une section pour la protection d'au moins une aire périphérique des surfaces de contact entre les dits parties qui doivent être unies.

2. Elément amortisseur selon la revendication 1, **caractérisé par** un corps qui a une forme fondamentalement à L avec une paroi horizontale de support (25) et une paroi verticale (26).

3. Elément amortisseur selon la revendication 2, **caractérisé en ce que** la paroi horizontale de support (25) e la paroi verticale (26) sont les deux fondamentalement plates.

4. Elément amortisseur selon la revendication 2, **caractérisé en ce que** la dite paroi horizontale de support (25) est plate, et la dite paroi verticale (26) a des ondulations qui sont parallèles à la paroi horizontale.

5. Elément amortisseur selon les revendications 2 et 3 ou 4, **caractérise en ce que** entre la paroi horizontale de support et la paroi verticale ont été envisagés insertions ou nervures angulaires (28).

6. Elément amortisseur selon la revendication 2, **caractérisé en ce que** la dite paroi horizontale (30) est plate, et la dite paroi verticale (31) a des ondulations qui sont à angle droit avec la paroi horizontale.

7. Elément amortisseur selon la revendication 6, **caractérisé en ce qu'**une marche (56) a été envisagée entre la paroi horizontale (57) et la paroi verticale (58).

8. Elément amortisseur selon la revendication 8, **caractérise en ce que** la paroi de base a la forme d'une fourche (60).

9. Elément amortisseur selon la revendication 2, **caractérise en ce que** la dite paroi horizontale (30) a un relief (32), et **en ce que** la dite paroi verticale a une ondulation qui est à angle droit avec la paroi horizontale.

10. Elément amortisseur selon quelconque des revendications précédentes, **caractérisé en ce que** au mois la paroi verticale est envisagée avec traces de coupure (33) pour pouvoir enlever des portions et pour régler la hauteur.

11. Elément amortisseur selon quelconque des revendications précédentes, **caractérisé en ce que** le dit corps est envisagé avec une languette ou avec des bandes de prise qui peuvent être enlevés.

12. Elément amortisseur selon quelconque des revendications précédentes, **caractérise en ce que** le dit corps peut être envisagé avec surfaces adhésives ou biadhésives.

13. Elément amortisseur selon quelconque des revendications précédentes, **caractérise en ce que** le dit corps est réalisé en matière plastique, qui est choisi parmi un élastomère, matériaux thermoplastiques, compositions thermodurcissables, polymères moussés et silicone sous forme de pâte ou liquide, avec un éventuel revêtement et/ou surmoulage avec des insertions ou filet métallique.
